# EUROPEAN PATENT SPECIFICATION

(11) **EP 0 864 850 B1**
(45) Date of publication and mention of the grant of the patent: **27.08.2003**
(21) Application number: 97850039.5
(22) Date of filing: 11.03.1997
(51) Int. Cl.: G01F 1/80

(54) **Mass flow measuring device**
Massendurchflussmesser
Débitmètre massique

(43) Date of publication of application: 16.09.1998
(73) Proprietor: S.E.G. MEKANIK AB, S-662 00 Amal (SE)
(72) Inventor: Söderholm, Arne, 167 67 Bromma (SE); Söderholm, Olle, 161 55 Bromma (SE)
(74) Representative: Karlström, Lennart

(56) References cited:
- EP-A- 0 432 627
- EP-A- 0 537 765
- EP-A- 0 537 766

## Description

The present invention relates to a mass flow measuring device, in particular for bulk material or a fluid, and the invention especially relates to an inlet tube arrangement used in a measuring device in which the mass flow rate is measured by using the Coriolis measuring principle.

Such a prior measuring device is described in our copending European patent application No. 96850202.1, filed on 29 November 1996 and not made available to the public before the filing date of the present application, describing the main principles for such a mass flow meter, and to which application herewith is referred.

In such a measuring device the particles to be measured are subjected to tangential acceleration in a whirling impeller, and the torque exerted on the vanes of the impeller in reaction to the Coriolis force of accelerated particles is being measured as an indication of the mass flow rate. The object of our above European patent application was to avoid measurement errors, due to uneven distribution of the material to be measured.

Even though the accuracy in the measurements has been greatly improved by our previous device, it is still subject to some errors if the distribution of the material can not be guaranteed. The errors depend on that the Coriolis force is reduced when the material is introduced in a position outside the center point of the impeller.

From EP-A-0 537 766 and EP-A-0 537 765 a Coriolis flow meter is know in which the amount of material passing the meter is measured with the help of measuring reaction forces in the flow meter. The flow meters shown in those documents are mainly designed for flow of measuring flow of bulk material in pneumatic transport systems. The flow distribution arrangements shown in these prior documents are arranged for avoiding any influence of the transporting air flow through the measuring device, and especially for avoiding any whirling motion of said air.

The object of the present invention is therefore to further improve the distribution of material introduced into the impeller by means of the inlet tube.

The above object has been obtained in that the invention has been given the features stated in the independent claim 1. Preferred embodiments of the invention are defined in the dependent claims.

According to the invention the flow of material into the impeller is given a rotation when passing through the inlet tube, wherein the direction of rotation of the material is given in the opposite direction to that of the impeller. When the material is given a rotation in the opposite direction to the impeller, the force necessary to give the initial speed to the material where it is introduced into the impeller is increased, compensating for the loss in Coriolis force.

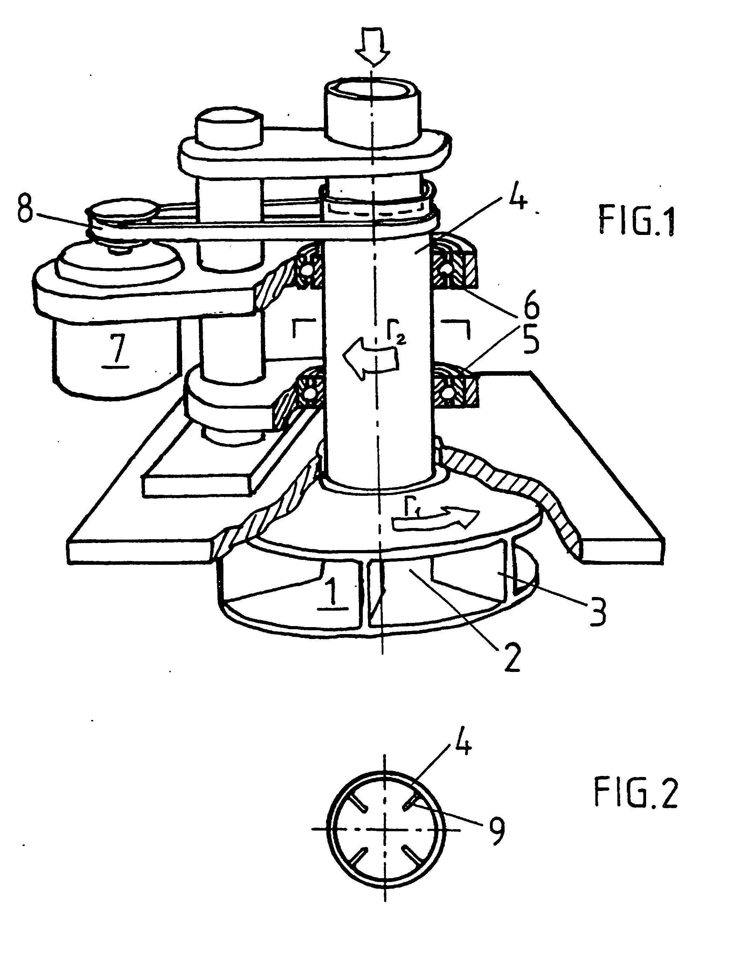

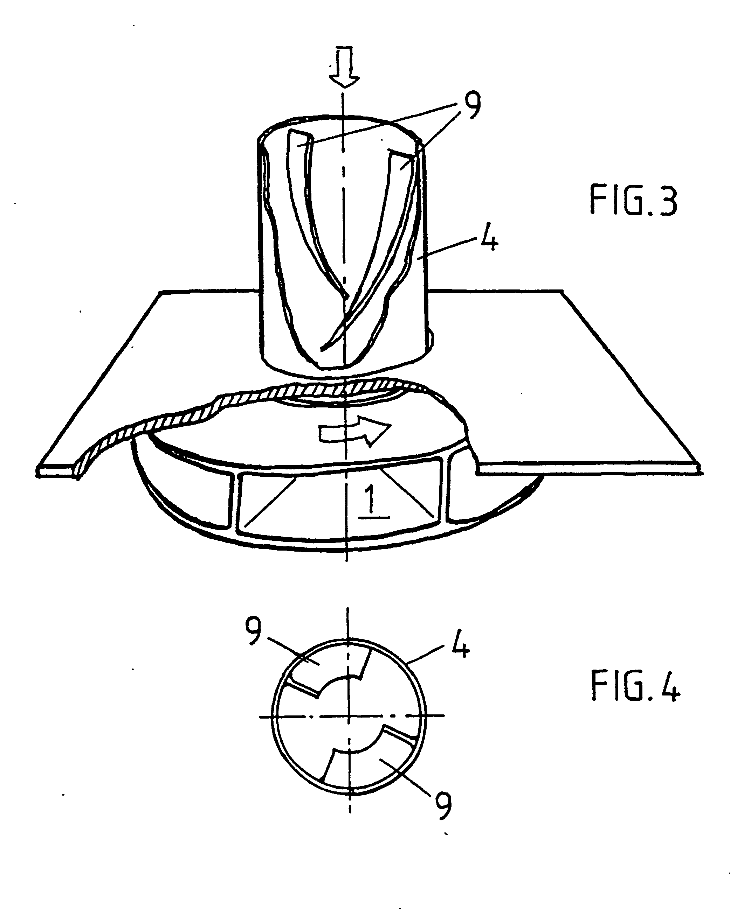

The invention will now be described in the form of a non-limiting embodiment, shown in the enclosed drawings, in which **Fig. 1** shows a schematic perspective view of part of a mass flow measuring device including an inlet tube, according to the invention, **Fig. 2** shows schematically a radial section through an inlet tube according to a first embodiment of the invention, **Fig. 3** shows a partial section through an inlet tube according to a second embodiment of the invention, and **Fig. 4** shows schematically an radial section through the inlet tube shown in Fig. 3.

The part of the device shown in Fig. 1 is intended to be a part of a complete device for measuring a mass flow of the kind described in our copending European patent application No. 96850202.1, but in this Fig. is only shown the impeller 1. The other parts relating to the measuring device can have the same, but also alternative, designs as those shown in our previous application. The impeller 1 is mounted for rotation in a first direction of rotation r₁, around a vertical axis of rotation. The impeller 1 is provided with a central reception area 2, where no vanes are located. Outside the central reception area vanes 3 are leading to the circumference of the impeller 1, for guiding the material to be measured from the central reception area 2 out from the impeller 1 via the vanes 3.

As in our earlier application an inlet tube 4 is located above the central reception area 2, for guiding the material to be measured from a feeding mechanism, not shown, into the central reception area of the impeller 1. The present invention especially relates to the arrangement of the inlet tube 4.

To obtain the desired accuracy of distribution of the material fed into the impeller 1 the inlet tube 4 is made to rotate in a second direction of rotation r₂ opposite to the direction of rotation r₁ of the impeller 1. As shown in Fig. 1 the inlet tube 4 is journalled in bearings 5, 6 at its lower and upper ends, respectively. The location of the inlet tube 4 is thereby accurately placed over the central reception area 2, and the inlet tube 4 can be rotated by means of a motor 7, driving a drive belt 8, directly acting on the inlet tube 4. By the rotation of the inlet tube 4 a more uniform distribution of the material fed in over the central reception area is obtained. Preferably the speed of rotation of the inlet tube 4 is of about the same magnitude as that of the impeller 1 but, as stated above, in the opposite direction.

The inlet tube 4 can preferably be provided with internal guide means, e.g. cam surfaces 9, attached to the internal wall of the inlet tube and extending essentially radially towards the center of the tube, as shown in Fig. 2. The cam surfaces can extend part of the distance towards the center of the tube, thereby creating a free central part of the tube.

The cam surfaces 9 can, as shown in Figs. 3 and 4, also be arranged in a screw line form in the longitudinal direction of the inlet tube, thus creating a rotation of the material when passing over the cam surfaces down the inlet tube. The screw line formed cam surfaces 9 run in the opposite direction to the direction of rotation r₁ of the impeller 1.

## Claims

1. A mass flow measuring device comprising an inlet tube (4) and a rotating impeller (1), wherein the inlet tube (4) is arranged centrally above the rotating impeller (1) to which the material to be measured is fed through the inlet tube, and the inlet tube being provided with flow distributing means (9) inside the tube, **characterised in that** the inlet tube (4) or the flow distributing means (9) is arranged to give the material a direction of rotation (r₂) opposite to that (r₁) of the impeller (1).

2. A mass flow measuring device according to claim 1, **characterised in that** the part of the inlet tube (4) located closest to the impeller (1) is rotatable.

3. A mass flow measuring device according to claim 2, **characterised in that** said part of the inlet tube (4) is rotatable with a speed of rotation of the same magnitude as that of the impeller (1).

4. A mass flow measuring device according to any of the preceding claims, **characterised in that** the flow distributing means (9) includes cam surfaces attached to the inside of the inlet tube (4).

5. A mass flow measuring device according to claim 4, **characterised in that** the cam surfaces (9) are arranged in a screw line form in the longitudinal direction of the inlet tube (4).

6. A mass flow measuring device according to claim 5, **characterised in that** the screw line runs in opposite direction to the direction of rotation (r₁) of the impeller (1).

7. A mass flow measuring device according to claim 4, **characterised in that** the cam surfaces (9) are arranged in parallel with the longitudinal direction of the inlet tube (4).

8. A mass flow measuring device according to claim 1, **characterised in that** the inlet tube (4) is arranged non-rotatable, and that the inlet tube (4) internally is provided with cam surfaces (9) arranged in a screw line form in the longitudinal direction of the inlet tube (4), and that the screw line runs in opposite direction to the direction of rotation (r₁) of the impeller (1).

## Patentansprüche

1. Massendurchflussmesser mit einem Einlassrohr (4) und einem rotierenden Messrad (1), bei dem das Einlassrohr (4) mittig über dem rotierenden Messrad (1) angeordnet ist, welchem das zu messende Material durch das Einlassrohr zugeführt wird, und bei dem das Einlassrohr mit einem Flussverteilungsmittel (9) im Inneren des Rohrs versehen ist, **dadurch gekennzeichnet, dass** das Einlassrohr (4) oder das Flussverteilungsmittel (9) eingerichtet ist, um dem Material eine Rotationsrichtung (r₂) zu verleihen, die der (r₁) des Messrads (1) entgegengesetzt ist.

2. Massendurchflussmesser nach Anspruch 1, **dadurch gekennzeichnet, dass** der Teil des Einlassrohrs (4), der dem Messrad (1) am nächsten liegt, rotierbar ist.

3. Massendurchflussmesser nach Anspruch 2, **dadurch gekennzeichnet, dass** der besagte Teil des Einlassrohrs (4) mit einer Rotationsgeschwindigkeit der gleichen Größenordnung wie die des Messrads (1) rotierbar ist .

4. Massendurchflussmesser nach einem der vorhergehenden Ansprüche, **dadurch gekennzeichnet, dass** das Flussverteilungsmittel (9) Nockenflächen enthält, die an der Innenseite des Einlassrohrs (4) befestigt sind.

5. Massendurchflussmesser nach Anspruch 4, **dadurch gekennzeichnet, dass** die Nockenflächen (9) in Form einer Schraubenlinie in der longitudinalen Richtung des Einlassrohrs (4) angeordnet sind.

6. Massendurchflussmesser nach Anspruch 5, **dadurch gekennzeichnet, dass** die Schraubenlinie in entgegengesetzter Richtung zur Rotationsrichtung (r₁) des Messrads (1) verläuft.

7. Massendurchflussmesser nach Anspruch 4, **dadurch gekennzeichnet, dass** die Nockenflächen (9) parallel zu der longitudinalen Richtung des Einlassrohrs (4) angeordnet sind.

8. Massendurchflussmesser nach Anspruch 1, **dadurch gekennzeichnet, dass** das Einlassrohr (4) nicht-rotierbar angeordnet ist, und dass das Einlassrohr (4) im Inneren mit Nockenflächen (9) versehen ist, die in Form einer Schraubenlinie in der longitudinalen Richtung des Einlassrohrs (4) angeordnet sind, und dass die Schraubenlinie in entgegengesetzter Richtung zur Rotationsrichtung (r₁) des Messrads (1) verläuft.

## Revendications

1. Débitmètre massique comprenant un tube d'entrée (4) et un accélérateur rotatif (1), dans lequel le tube d'entrée (4) est placé dans une position centrale au-dessus de l'accélérateur rotatif (1) auquel la matière à mesurer est amenée par le tube d'entrée, ce tube d'entrée étant muni de moyens de distribution de débit (9) à l'intérieur du tube,
**caractérisé en ce que**
le tube d'entrée (4) ou les moyens de distribution de débit (9) sont disposés pour donner à la matière un sens de rotation (r₂) opposé au sens de rotation (r₁) de l'accélérateur (1).

2. Débitmètre massique selon la revendication 1.
**caractérisé en ce que**
la partie du tube d'entrée (4) qui est placée le plus près de l'accélérateur (1), est rotative.

3. Débitmètre massique selon la revendication 2,
**caractérisé en ce que**
la partie du tube d'entrée (4) peut tourner à une vitesse de rotation de même valeur que celle de l'accélérateur (1).

4. Débitmètre massique selon l'une quelconque des revendications précédentes,
**caractérisé en ce que**
les moyens de distribution de débit (9) comprenant des surfaces de came fixées à l'intérieur du tube (4).

5. Débitmètre massique selon la revendication 4,
**caractérisé en ce que**
les surfaces de came (9) sont disposées en forme d'hélice dans la direction longitudinale du tube d'entrée (4).

6. Débitmètre massique selon la revendication 5,
**caractérisé en ce que**
l'hélice tourne en sens inverse du sens de rotation (r₁) de l'accélérateur (1).

7. Débitmètre massique selon la revendication 4,
**caractérisé en ce que**
les surfaces de came (9) sont disposées parallèlement à la direction longitudinale du tube d'entrëe (4).

8. Débitmètre massique selon la revendication 1,
**caractérisé en ce que**
le tube d'entrée (4) est disposé de manière à ne pouvoir tourner ;
le tube d'entrée (4) est muni intérieurement de surfaces de came (9) disposées en forme d'hélice dans la direction longitudinale de ce tube d'entrée (4) : et
l'hélice tourne en sens inverse du sens de rotation (r1) de l'accélérateur (1).
